# FASCICULE DE BREVET EUROPEEN

(11) **EP 3 894 235 B1**
(45) Date de publication et mention de la délivrance du brevet: **23.10.2024**
(21) Numéro de dépôt: 19829419.1
(22) Date de dépôt: 09.12.2019
(51) Int. Cl.: B60C 1/00, C08F 293/00

(54) **PNEUMATIQUE COMPRENANT UNE COMPOSITION POLYMERIQUE COMPRENANT UN ELASTOMERE THERMOPLASTIQUE COMPRENANT DES UNITES ISSUES DU MONOMERE DIPHENYLENE ETHER**
REIFEN MIT EINER POLYMERZUSAMMENSETZUNG, DIE EIN THERMOPLASTISCHES ELASTOMER UMFASST, DAS EINHEITEN UMFASST, DIE VON DIPHENYLENETHERMONOMER ABGELEITET SIND
TYRE COMPRISING A POLYMERIC COMPOSITION COMPRISING A THERMOPLASTIC ELASTOMER COMPRISING UNITS DERIVED FROM DIPHENYLENE ETHER MONOMER

(30) Priorité: 14.12.2018 FR 1872934
(43) Date de publication de la demande: 20.10.2021
(73) Titulaire: COMPAGNIE GENERALE DES ETABLISSEMENTS MICHELIN, 63000 Clermont-Ferrand (FR)
(72) Inventeur: COUE, Jean, 63040 CLERMONT-FERRAND CEDEX 09 (FR); LAUBE, Stéphanie, 63040 CLERMONT-FERRAND CEDEX 09 (FR); LIBERT, Romain, 63040 CLERMONT-FERRAND CEDEX 09 (FR); VEGI, Garry, 63040 CLERMONT-FERRAND CEDEX 09 (FR)
(74) Mandataire: M.F.P. Michelin
(86) Numéro de dépôt international: PCT/EP2019/084205
(87) Numéro de publication internationale: WO 2020/120390

(56) Documents cités:
- WO-A1-2016/142388
- FR-A1- 3 022 912
- US-A- 3 045 638
- US-A- 3 448 176

## Description

La présente invention se rapporte à un pneumatique comprenant une composition polymérique comprenant un ou plusieurs élastomères thermoplastiques comprenant des blocs isopréniques et des blocs à base de monomères styréniques et de diphényléthylène, ainsi qu'à un pneumatique comprenant des couches ou nappes formées d'une telle composition, lesdites couches ou nappes pouvant être en particulier tout ou partie d'une bande de roulement.

Dans un pneumatique conventionnel, la bande de roulement comprend généralement majoritairement en poids un ou plusieurs élastomères diéniques.

Un objectif constant des manufacturiers de pneumatiques est d'améliorer l'adhérence des pneumatiques sur sol mouillé. En parallèle, un autre objectif est de diminuer la résistance au roulement des pneumatiques. Cependant, ces deux objectifs sont difficiles à concilier en ce que l'amélioration de l'adhérence suppose d'augmenter les pertes hystérétiques tandis que l'amélioration de la résistance au roulement suppose de baisser les pertes hystérétiques. Il existe donc un compromis de performance à optimiser.

De ce but, les demanderesses ont précédemment développé des pneumatiques pourvus d'une bande de roulement comprenant un élastomère thermoplastique. Ces pneumatiques présentent un très bon compromis de performance en adhérence et en résistance au roulement.

Pour perfectionner encore ces pneumatiques, la rigidité à température ambiante des bandes de roulement peut encore être améliorée.

Par ailleurs, les bandes de roulement en élastomères thermoplastiques ont une mise en oeuvre facilitée due à une faible viscosité en température.

Cependant, sur le pneumatique fini, il se peut que la faible rigidité à haute température recherchée pour la mise en oeuvre soit alors un problème pour la performance du pneumatique, en particulier en utilisation à haute température. En effet, lors de cycles d'utilisation du pneumatique tel que des freinages, cela peut se traduire dans des cas extrêmes par un ramollissement de la bande de roulement qui aurait pour conséquence de diminuer l'endurance de la bande de roulement.

Ainsi, les performances en tenue en température des bandes de roulement peuvent encore être améliorées.

Par conséquent, il existe un besoin d'améliorer la tenue en température des bandes de roulement en élastomères thermoplastiques, c'est-à-dire de limiter la baisse de rigidité lorsque la température augmente, sans dégrader les possibilités de mise en oeuvre de ces bandes de roulement.

Par ailleurs, il est avantageux que la bande de roulement présente de bonnes propriétés mécaniques, en particulier sur le plan de la rigidité pour un allongement rupture donné.

La demanderesse a maintenant découvert que l'utilisation dans une composition polymérique d'un pneumatique d'un élastomère thermoplastique à blocs comprenant au moins un bloc élastomère et au moins un bloc thermoplastique, dans lequel chaque bloc élastomère comprend au moins 70% en poids d'unités issues de l'isoprène, par rapport au poids dudit bloc élastomère, et ledit bloc thermoplastique comprend 65 à 80% en poids d'unités issues d'un ou plusieurs monomères styréniques et 20 à 35% en poids d'unités issues du diphényléthylène, par rapport au poids dudit bloc thermoplastique, permettait de résoudre les problèmes ci-dessus et en particulier d'obtenir un pneumatique présentant une faible résistante au roulement, une rigidité convenable à faible température et qui présente une baisse limitée à haute température.

L'invention a donc pour objet un pneumatique comprenant une composition polymérique comprenant au moins un élastomère thermoplastique à blocs comprenant au moins un bloc élastomère et au moins un bloc thermoplastique, dans lequel chaque bloc élastomère comprend au moins 70% en poids d'unités issues de l'isoprène, par rapport au poids dudit bloc élastomère, et ledit bloc thermoplastique comprend 65 à 80% en poids d'unités issues d'un ou plusieurs monomères styréniques et 20 à 35% en poids d'unités issues du diphényléthylène, par rapport au poids dudit bloc thermoplastique.

Dans la présente description, sauf indication expresse différente, tous les pourcentages (%) indiqués sont des pourcentages massiques.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères, c'est-à-dire du poids total du ou des élastomères, qu'ils soient thermoplastiques ou non thermoplastiques, de la composition. Ainsi, un constituant à 60 pce signifiera par exemple 60 g de ce constituant pour 100 g d'élastomère.

Par élastomère thermoplastique (TPE), on entend, de manière connue, un polymère de structure intermédiaire entre un polymère thermoplastique et un élastomère.

Un élastomère thermoplastique est constitué d'un ou plusieurs segments rigides « thermoplastiques » reliés à un ou plusieurs segments souples « élastomères ».

Ainsi, le ou les élastomères thermoplastiques de la composition polymérique du pneumatique selon l'invention comprennent au moins un bloc élastomère et au moins un bloc thermoplastique.

Typiquement, chacun de ces segments ou blocs contient au minimum plus de 5, généralement plus de 10 unités de base.

Dans la présente demande, lorsqu'il est fait référence à la température de transition vitreuse d'un élastomère thermoplastique, il s'agit de la température de transition vitreuse relative au bloc élastomère (sauf indication contraire). En effet, de manière connue, les élastomères thermoplastiques présentent deux pics de température de transition vitreuse (Tmg, mesurée selon ASTM D3418), la température la plus basse étant relative à la partie élastomère de l'élastomère thermoplastique, et la température la plus haute étant relative à la partie thermoplastique de l'élastomère thermoplastique. Ainsi, les blocs souples des élastomères thermoplastiques se définissent généralement par une Tg inférieure ou égale à la température ambiante (25°C), tandis que les blocs rigides ont une Tg supérieure ou égale à 80°C. Pour être de nature à la fois élastomère et thermoplastique, l'élastomère thermoplastique doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Ainsi, le ou les élastomères thermoplastiques utilisables selon l'invention (donc le ou les blocs élastomères des élastomères thermoplastiques) présentent préférentiellement une température de transition vitreuse qui est inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la température de transition vitreuse des élastomères thermoplastiques est plus préférentiellement encore inférieure ou égale à -10°C.

De manière préférentielle également, la température de transition vitreuse des élastomères thermoplastiques utilisables selon l'invention est supérieure à -100°C.

La masse moléculaire moyenne en nombre (notée Mn) des élastomères thermoplastiques est préférentiellement comprise entre 30 000 et 500 000 g/mol, plus préférentiellement comprise entre 40 000 et 400 000 g/mol. En dessous des minima indiqués, la cohésion entre les chaînes d'élastomère des élastomères thermoplastiques, notamment en raison de leur dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante pour la mise en oeuvre. Ainsi, on a constaté qu'une valeur comprise entre 50 000 et 300 000 g/mol était particulièrement bien adaptée à une utilisation des élastomères thermoplastiques dans une bande de roulement de pneumatique.

La masse moléculaire moyenne en nombre (Mn) des élastomères thermoplastiques est déterminée de manière connue, par chromatographie d'exclusion stérique (SEC). L'échantillon est préalablement solubilisé dans un solvant adapté à une concentration d'environ 2 g/l ; puis la solution est filtrée sur filtre de porosité 0,45 µm avant injection. L'appareillage utilisé est une chaîne chromatographique « WATERS alliance ». Le volume injecté de la solution de l'échantillon de polymère est de 100 µl. Le détecteur est un réfractomètre différentiel « WATERS 2410 » et son logiciel associé d'exploitation des données chromatographiques est le système « EMPOWER ». Les conditions sont adaptables par l'homme du métier. Par exemple dans le cas des TPE de type COPE, le solvant d'élution est l'hexafluoroisopranol avec du sel de trifluoroactétate de sodium à une concentration de 0,02 M, le débit de 0,5 ml/min, la température du système de 35°C et la durée d'analyse de 90 min. On utilise un jeu de trois colonnes PHENOMENEX en série, de dénominations commerciales « PHENOGEL » (tailles de pores : 10⁵, 10⁴, 10³ A). Par exemple dans le cas des élastomères thermoplastiques styréniques, l'échantillon est préalablement solubilisé dans du tétrahydrofuranne à une concentration d'environ 1 g/L ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 mL/mn, la température du système de 35°C et la durée d'analyse de 90 mn. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µL. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité (Ip = Mw/Mn avec Mw masse moléculaire moyenne en poids) du ou des élastomères thermoplastiques est de préférence inférieur à 3 ; plus préférentiellement inférieur à 2, et encore plus préférentiellement inférieur à 1,5.

Les élastomères thermoplastiques utilisables selon l'invention peuvent être des copolymères avec un petit nombre de blocs (moins de 5, typiquement 2 ou 3), auquel cas ces blocs ont de préférence des masses élevées, supérieures à 15 000 g/mol.

Les élastomères thermoplastiques peuvent être également des copolymères avec un grand nombre de blocs (plus de 30, typiquement de 50 à 500) plus petits, auquel cas ces blocs ont de préférence des masses peu élevées, par exemple de 500 à 5000 g/mol, ces élastomères thermoplastiques seront appelés élastomères thermoplastiques multiblocs par la suite.

Selon une première variante, les élastomères thermoplastiques utilisables selon l'invention se présentent sous une forme linéaire.

Dans un premier mode particulier de cette première variante, les élastomères thermoplastiques sont des copolymères diblocs : bloc thermoplastique/bloc élastomère.

Dans un deuxième mode particulier de cette première variante, les élastomères thermoplastiques sont des copolymères triblocs : bloc thermoplastique/bloc élastomère/bloc thermoplastique, c'est-à-dire un bloc élastomère central et un bloc thermoplastique terminal à chacune des deux extrémités du bloc élastomère.

Dans un troisième mode particulier de cette première variante, les élastomères thermoplastiques sont constitués d'un enchaînement linéaire de blocs élastomères et de blocs thermoplastiques (élastomères thermoplastiques multiblocs).

Selon une deuxième variante, les élastomères thermoplastiques utilisables selon l'invention se présentent sous une forme étoilée à au moins trois branches.

Par exemple, les élastomères thermoplastiques peuvent alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une troisième variante, les élastomères thermoplastiques utilisables selon l'invention se présentent sous une forme branchée ou dendrimère. Les élastomères thermoplastiques peuvent alors se composer d'un bloc élastomère branché ou dendrimère et d'un bloc thermoplastique, situé à l'extrémité des branches du bloc élastomère dendrimère.

Comme expliqué précédemment, la composition polymérique du pneumatique selon l'invention comprend au moins un élastomère thermoplastique à blocs comprenant au moins un bloc élastomère. Chaque bloc élastomère comprend au moins 70% en poids d'unités issues de l'isoprène, par rapport au poids dudit bloc élastomère.

De préférence, l'élastomère thermoplastique à blocs comprend au moins un bloc élastomère comprenant en outre des unités issues de monomères styréniques.

Dans ce cas, de préférence, les unités issues de monomères styréniques dans ledit bloc élastomère représentent 10 à 20% en poids du bloc élastomère.

Selon un premier mode de réalisation, l'élastomère thermoplastique comprend au moins un bloc élastomère constitué d'unités issues de l'isoprène et d'unités issues d'un ou plusieurs monomères styréniques.

Selon un second mode de réalisation, l'élastomère thermoplastique comprend au moins un bloc élastomère constitué d'unités issues de l'isoprène.

En particulier, l'élastomère thermoplastique comprend au moins un bloc élastomère constitué d'unités issues de l'isoprène et au moins un bloc élastomère constitué d'unités issus de l'isoprène et d'unités issus d'un ou plusieurs monomères styréniques.

Comme expliqué précédemment, l'élastomère thermoplastique utilisé selon l'invention comprend au moins un bloc thermoplastique.

Par bloc thermoplastique, on entend un bloc constitué de monomères polymérisés et ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

En effet, dans le cas d'un polymère semi-cristallin, on peut observer une température de fusion supérieure à la température de transition vitreuse. Dans ce cas, on prend en compte pour la définition ci-dessus la température de fusion et non pas la température de transition vitreuse.

Les monomères styréniques utilisables dans le bloc élastomère et dans le bloc thermoplastique peuvent être choisis parmi le styrène, l'o-, m- ou p-méthylstyrène, l'alpha-méthylstyrène, le beta-méthylstyrène, le 2,6-diméthylstyrène, le 2,4-diméthylstyrène, l'alpha-méthyl-o-méthylstyrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chlorostyrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène, l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle.

De préférence le monomère styrénique est le styrène.

De préférence pour l'invention, les blocs élastomères des élastomères thermoplastiques présentent au total, une masse moléculaire moyenne en nombre (« Mn ») allant de 25 000 g/mol à 350 000 g/mol, de préférence de 35 000 g/mol à 250 000 g/mol de manière à conférer aux élastomères thermoplastiques de bonnes propriétés élastomériques et une tenue mécanique suffisante et compatible avec l'utilisation en bande de roulement de pneumatique.

De préférence, les blocs thermoplastiques des élastomères thermoplastiques présentent au total, une masse moléculaire moyenne en nombre (« Mn ») allant de 5 000 g/mol à 150 000 g/mol, de manière à conférer aux élastomères thermoplastiques de bonnes propriétés élastomériques et une tenue mécanique suffisante et compatible avec l'utilisation en bande de roulement de pneumatique.

Le ou les blocs thermoplastiques sont préférentiellement présents dans des proportions suffisantes pour préserver le caractère thermoplastique des élastomères thermoplastiques utilisables selon l'invention. Le taux minimum de blocs thermoplastiques dans les élastomères thermoplastiques peut varier en fonction des conditions d'utilisation des élastomères thermoplastiques.

D'autre part, la capacité des élastomères thermoplastiques à se déformer lors de la préparation du pneu peut également contribuer à déterminer la proportion des blocs thermoplastiques dans les élastomères thermoplastiques utilisables selon l'invention.

L'élastomère thermoplastique utilisable dans la composition polymérique du pneumatique selon l'invention représente généralement de 15 à 100 pce de la composition polymérique, de préférence de 50 à 100 pce, plus préférentiellement de 70 à 100 pce.

L'élastomère thermoplastique utilisable dans la composition polymérique du pneumatique selon l'invention peut être préparé par le procédé de synthèse tel que décrit ci-après.

L'élastomère thermoplastique utilisable dans la présente invention est préparé par polymérisation anionique en utilisant des techniques connues. L'initiateur de polymérisation est généralement un composé organométallique, tel que des composés d'organolithium, par exemple, les éthyle, propyle, isopropyle, n-butyle, sec-butyle, tert-butyle, phényle, hexylbiphényl, hexaméthylènediediol, butadiényle-, l'isoprényle, le 1,1-diphénylhexyllithium ou le polystyryllithium. La quantité d'initiateur nécessaire est calculée sur la base du poids moléculaire à atteindre, généralement de 0,002 à 5% en mole, sur la base de la quantité de monomère à polymériser. Les solvants appropriés comprennent les hydrocarbures aliphatiques, cycloaliphatiques ou aromatiques ayant de 4 à 12 atomes de carbone, tels que le pentane, l'hexane, l'heptane, le cyclopentane, le cyclohexane, le méthylcyclohexane, la décaline, l'isooctane, le benzène, les alkylbenzènes, tels que le toluène, le xylène ou l'éthylbenzène, ou des mélanges appropriés.. La terminaison de chaîne polymère est réalisée en utilisant un agent de couplage, tel que des composés bi ou polyfonctionnels, par exemple le divinylbenzène, des halogénures d'hydrocarbures aliphatiques ou araliphatiques, tels que le 1,2-dibromoéthane, le bis (chlorométhyl) benzène ou le tétrachlorure de silicium, le dialkylé) ou le dichlorure de diarylsilicium, le trichlorure d'alkyle ou d'arylsilicium, le tétrachlorure d'étain, les méthoxoxydes d'alkylsilicium, les éthoxydes d'alkylsilicium, les aldéhydes polyfonctionnels, tels que le dialdéhyde téréphtalique, les cétones, les esters, les esters, les anhydrides ou les époxydes. Pour les copolymères séquences hydrogénés, il est préférable d'utiliser du 1,2-dibromoéthane ou des diépoxydes, en particulier des éthers diglycidyliques, tels que l'éther diglycidylique de 1,4-butanediol.

Si on le souhaite, un additif de base de Lewis, qui affecte les paramètres de polymérisation, peut également être utilisé. Des exemples de bases de Lewis comprennent le diméthyléther, le diéthyléther, le diméthyléther d'éthylèneglycol, le 1,2-diéthoxypropane, le diméthyléther de diéthylèneglycol, le tétrahydrofurane, les éthers de tétrahydrofurfuryle, tels que l'éther de tétrahydrofurfuryle et de méthyle et les amines tertiaires.

L'hydrogénation des groupes vinyle présents dans l'élastomère thermoplastique peut être réalisée dans des conditions telles qu'au moins 80% en moles, au moins 90% en moles ou au moins 98% en moles des groupes vinyle soient réduits et que 0 à 10 mol % des doubles liaisons arènes sont réduites. Un catalyseur approprié à base de nickel, de cobalt ou de titane est utilisé dans l'étape d'hydrogénation.

La composition polymérique utilisée dans le pneumatique selon l'invention peut comprendre un ou plusieurs autres élastomères thermoplastiques différents de l'élastomère thermoplastique défini ci-dessus.

La composition polymérique utilisée dans le pneumatique selon l'invention peut également comprendre un ou plusieurs élastomères non thermoplastiques, tels que les élastomères diéniques bien connus del'homme du métier.

De manière particulièrement préférée, le ou les élastomères thermoplastiques utilisables selon l'invention et décrits précédemment sont les seuls élastomères de la composition polymérique du pneumatique selon l'invention.

La composition polymérique utilisable dans le pneumatique selon l'invention peut également comprendre un système de réticulation.

De préférence, le système de réticulation est à base de soufre ou d'un donneur de soufre.

Par l'expression « système de réticulation à base de », il faut entendre que le système de réticulation comporte un mélange et/ou le produit de réaction des différents constituants utilisés dans le système de réticulation, et en particulier le soufre ou le donneur de soufre, certains de ces constituants de base étant susceptibles de, ou destinés à, réagir entre eux ou avec les autres constituants de la composition du pneumatique, au moins en partie, lors des différentes phases de fabrication de la composition du pneumatique.

Le système de réticulation peut être un système de vulcanisation. Dans ce cas, il est préférentiellement à base de soufre ou à base d'un donneur de soufre et d'un accélérateur de vulcanisation, en particulier un accélérateur primaire de vulcanisation.

Parmi les donneurs de soufre on peut citer par exemple les alkyl phénol disulfures (APDS) tel que par exemple le disulfure de paratertiobutylphénol.

Avantageusement, le taux en soufre ou en donneur de soufre est compris entre 0,5 et 2 pce, de préférence compris entre 0,5 et 1,5 pce, de préférence encore entre 0,5 et 1,4 pce.

On peut utiliser comme accélérateur primaire tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

De manière particulièrement préférée, l'accélérateur primaire de vulcanisation est le N-cyclohexyl-2-benzothiazyle sulfénamide (CBS).

Selon un mode de réalisation particulier de l'invention, le taux en accélérateur(s) de vulcanisation varie de 0,2 à 10 pce, de préférence varie de 0,2 à 7 pce, plus préférentiellement de 0,6 à 2 pce.

Avantageusement, le ratio pondéral soufre ou donneur de soufre / accélérateur de vulcanisation varie de 0.25 à 4.

A ce système de vulcanisation viennent optionnellement s'ajouter, divers accélérateurs secondaires ou activateurs de vulcanisation connus tels qu'oxyde de zinc, acide stéarique, dérivés guanidiques (en particulier diphénylguanidine), etc.

La composition polymérique utilisable selon l'invention peut également comprendre une charge renforçante.

En particulier, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTI), comme par exemple les noirs N115, N134, N234, N326, N330, N339, N347, N375, ou encore, selon les applications visées, les noirs de séries plus élevées (par exemple N660, N683, N772), voire même N990.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites « HDS »), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition polymérique (noir de carbone et/ou charge inorganique renforçante telle que silice) est compris dans un domaine allant de 0 à 30 %, ce qui correspond environ à un taux de 0 à 100 pce pour une composition polymérique sans plastifiant. Préférentiellement la composition polymérique utilisable selon l'invention comprend moins de 30 pce de charge renforçante et plus préférentiellement moins de 10 pce.

Selon une variante préférentielle de l'invention, la composition polymérique ne contient pas de charge renforçante.

De la même manière, la composition polymérique utilisable selon l'invention peut contenir une ou plusieurs charges micrométriques, inertes telles que les charges lamellaires connues de l'homme de l'art.

De préférence, la composition polymérique utilisable selon l'invention ne contient pas de charge micrométrique.

Le ou les élastomères thermoplastiques décrits précédemment sont suffisants à eux seuls pour que soit utilisable la composition polymérique selon l'invention.

Toutefois, selon un mode de réalisation préférentiel de l'invention, la composition polymérique peut comporter également, au moins un agent plastifiant, tel qu'une huile (ou huile plastifiante ou huile d'extension) ou une résine plastifiante dont la fonction est de faciliter la mise en oeuvre de la composition polymérique, particulièrement son intégration au pneumatique par un abaissement du module et une augmentation du pouvoir tackifiant.

On peut utiliser toute huile plastifiante, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier.

Par exemple, l'huile d'extension est choisie dans le groupe constitué par les huiles paraffiniques, telle qu'une huile paraffinique à basse viscosité (PABV).

Ainsi, dans un mode particulier de la présente invention, le au moins un agent plastifiant est une huile paraffinique.

L'homme du métier saura, à la lumière de la description et des exemples de réalisation qui suivent, ajuster la quantité de plastifiant en fonction des élastomères thermoplastiques utilisés (comme indiqué précédemment) ; des conditions particulières d'usage du pneumatique muni de la composition polymérique.

Lorsqu'elle est utilisée, on préfère que le taux d'huile d'extension soit compris dans un domaine variant de 0 à 80 pce, préférentiellement de 0 à 50 pce, plus préférentiellement de 5 à 50 pce selon la température de transition vitreuse et le module visés pour la composition polymérique.

La composition polymérique décrite précédemment peut comporter par ailleurs les divers additifs usuellement présents dans les bandes de roulements connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique.

De manière préférentielle, la composition polymérique ne contient pas tous ces additifs en même temps et de manière encore plus préférentielle, la composition polymérique ne contient aucun de ces agents.

Outre les élastomères précédemment décrits, la composition de la composition polymérique pourrait aussi comporter, toujours selon une fraction pondérale minoritaire par rapport aux élastomères thermoplastiques, des polymères autres que des élastomères, tels que par exemple des polymères thermoplastiques. Lorsqu'ils sont présents dans la composition polymérique, on préfère que le taux total de polymères thermoplastiques non élastomériques soit inférieur à 40 pce, préférentiellement compris entre 5 et 30 pce, et plus préférentiellement compris entre 10 et 25 pce.

Ces polymères thermoplastiques peuvent être notamment les polymères de poly(para-phénylène éther) (noté en abrégé « PPE »). Ces polymères thermoplastiques PPE sont bien connus de l'homme du métier, ce sont des résines solides à température ambiante (20°C) compatibles avec les polymères styréniques, qui sont notamment utilisées pour augmenter la température de transition vitreuse d'élastomères thermoplastique dont le bloc thermoplastique est un bloc styrénique (voir par exemple « Thermal, Mechanical and Morphological Analyses of Poly (2,6-dimethyl-1, 4 phenylene oxide)/Styrene-Butadiene-Styrene Blends », Tucker, Barlow and Paul, Macromolecules, 1988, 21, 1678-1685).

Le pneumatique selon l'invention comprend généralement une bande de roulement, la composition polymérique définie précédemment étant présente dans tout ou partie de la bande de roulement.

La bande de roulement peut-être montée sur un pneumatique de manière classique, ledit pneumatique comprenant en plus de la bande de roulement, un sommet, deux flancs et deux bourrelets, une armature de carcasse ancrée aux deux bourrelets, et une armature de sommet.

Optionnellement, le pneumatique selon l'invention peut comprendre en outre une sous-couche ou une couche d'adhésion entre la portion sculptée de la bande de roulement et l'armature de sommet.

De manière générale, le pneumatique selon l'invention est destiné à équiper des véhicules à moteur de type tourisme, SUV (« Sport Utility Vehicles »), deux roues (notamment motos), avions, ainsi que des véhicules industriels tels que des camionnettes, des poids-lourds et autres véhicules de transport ou de manutention.

A titre de poids lourds, on pourra notamment comprendre des métros, des bus et des engins de transport routier tels que camions, tracteurs, remorques et véhicules hors-la-route comme les engins agricoles ou de génie civil.

Le procédé de préparation d'un pneumatique tel que défini ci-dessus, comprend généralement les étapes suivantes : - extrusion ou co-extrusion de la bande de roulement, puis - pose de la bande de roulement extrudée sur le pneumatique, puis - cuisson du pneumatique.

Ainsi, la bande de roulement du pneumatique selon l'invention est tout d'abord préparée de façon classique, par incorporation des différents composants dans une extrudeuse bi-vis, de façon à réaliser la fusion de la matrice et une incorporation de tous les ingrédients, puis utilisation d'une filière permettant de réaliser le profilé.

Les différents composants de la bande de roulement sont en particulier les élastomères thermoplastiques vus précédemment qui sont disponibles par exemple sous la forme de billes ou de granulés.

La bande de roulement est ensuite posée sur le pneumatique.

Le pneumatique est ensuite cuit. La bande de roulement est alors généralement sculptée dans le moule de cuisson du pneumatique.

### Exemples

Les polymères testés sont présentés dans le tableau 1.

Les polymères P6, P7, P5, P1 et P2 sont selon l'invention.

Les polymères P8, COMP5 et COMP4 ne sont pas utilisables pour l'invention.

### Préparation des polymères

### Préparation du polymère Comp4.

Dans un réacteur en acier inoxydable résistant à la pression, séché et balayé avec un gaz inerte (réacteur 1), on ajoute successivement: 0,18 1 de cyclohexane; 9,05 g de 1,1-diphényléthylène; 74 mg d'éther diéthylique qui ont été chauffés à 50 ° C. On a ensuite ajouté 15 ml de sec-butyllithium à 0,16 mol / l, puis une lente addition de 30,5 g de styrène purifié. Au bout de deux heures, 190 g de la solution résultante ont été transférés dans un autre réacteur en acier inoxydable résistant à la pression, séchés et balayés avec un gaz inerte (réacteur 2). Le réacteur 2 contenait 1,06 1 de cyclohexane séché ; 0,37 ml de 1,2-diéthoxypropane ; 25,5 g d'un mélange d'isoprène à 60% en poids avec 40% en poids de butadiène. 1,5 ml de sec-butyllithium a été ajouté au réacteur 2, puis chauffé à 50 ° C quelques minutes avant l'ajout du transfert du réacteur 1. Les autres ajouts au réacteur 2 : ajout lent de plus de 30 minutes de 115 g d'un mélange d'isoprène à 60% en poids avec 40% en poids de butadiène et on a laissé la température atteindre 70 ° C ; une heure plus tard, 15 g de butadiène et après 1 minute 6 ml à 0,12 mol / 1 de méthyltriméthoxysilane. Finalement, 0,1 ml de 2-éthylhexanol a été ajouté au réacteur. La solution de polymère couplée et non réactive résultante a été précipitée dans de l'eau. Le bras non couplé avait un GPC (chromatographie par perméation de gel) de 127 kg / mol et les principales espèces avaient une GPC de 388 kg / mol.

### Préparation du polymère Comp5.

Dans le réacteur 1, ont été ajoutés successivement : 0,18 1 de cyclohexane ; 9,0 g de 1,1-diphényléthylène ; 78 mg d'éther diéthylique qui ont été chauffés à 50 ° C. 16 ml de sec-butyllithium à 0,23 mol / 1 ont été ajoutés et 31,3 g de styrène purifié ont été lentement ajoutés en l'espace de 14 minutes. Au bout de 90 minutes, 68 g de la solution résultante ont été transférés dans le réacteur 2. Le réacteur 2 contenait 1,09 1 de cyclohexane séché ; 0,39 ml de 1,2-diéthoxypropane ; 8,8 g d'un mélange d'isoprène à 60% en poids avec 40% en poids de butadiène. 1 ml de sec-butyllithium a été ajouté au réacteur 2, puis chauffé à 50 ° C quelques minutes avant l'ajout du transfert du réacteur 1. Les autres ajouts au réacteur 2 : addition lente sur 30 minutes de 119 g d'un mélange d'isoprène à 60% en poids avec 40% en poids de butadiène et on a laissé la température atteindre 70 ° C par la suite, on a laissé la réaction se poursuivre pendant 30 minutes. Finalement, 38,4 g de styrène ont été ajoutés et 23 minutes plus tard, les espèces réactives ont été terminées avec du méthanol. La solution de polymère non réactif résultante a été précipitée dans de l'eau. Les principales espèces de polymères avaient un GPC de 184 kg / mol.

### Préparation d'un exemple de polymère P1.

Dans le réacteur 1, ont été ajoutés successivement : 0,18 1 de cyclohexane ; 9,2 g de 1,1-diphényléthylène ; 95 mg d'éther diéthylique ; 11 ml de sec-butyllithium (0,17 mol / L); qui ont été chauffés à 50 ° C. 31,8 g de styrène ont été ajoutés lentement. Au bout de deux heures, 147 g de la solution résultante ont été transférés dans le réacteur 2. Le réacteur 2 contenait 1,10 1 de cyclohexane séché ; 0,47 ml de 1,2-diéthoxypropane ; 32,9 g d'isoprène. 1,3 ml de sec-butyllithium a été ajouté au réacteur 2, puis chauffé à 50 ° C quelques minutes avant l'ajout du transfert du réacteur 1. Les autres ajouts au réacteur 2 : ajout lent sur 30 minutes de 119,6 g d'isoprène. Finalement, 0,67 ml de divinylbenzène ont été ajoutés et la température a été augmentée à 70 ° C. Une heure plus tard, 0,23 ml de 2-éthylhexanol ont été ajoutés. La solution de polymère couplée et non réactive résultante a été précipitée dans de l'eau. Le bras non couplé avait une GPC de 185 kg / mol et les principales espèces avaient une GPC de 686 kg / mol.

### Préparation d'un exemple de polymère P2.

Dans le réacteur 1, on a ajouté séquentiellement : 0,20l de cyclohexane ; 9,16 g de 1,1-diphényléthylène ; 96 mg d'éther diéthylique ; 12 ml de sec-butyllithium (0,17 mol / L) ; qui ont été chauffés à 50 ° C. On a lentement ajouté 31,8 g de styrène, puis 3,1 g d'isoprène (2,5 heures après le début de la réaction). 20 minutes plus tard, 155 g de la solution résultante ont été transférés dans le réacteur 2. Le réacteur 2 contenait 1,10 1 de cyclohexane séché ; 0,3 ml de 1,2-diéthoxypropane ; 23,2 g de styrène ; 130,2g d'isoprène. 0,5 ml de sec-butyllithium a été ajouté au réacteur 2, puis chauffé à 50 ° C quelques minutes avant l'ajout du transfert du réacteur 1. Au bout d'une heure de réaction, 0,72 ml de divinylbenzène ont été ajoutés et la température a été augmentée à 70 ° C, puis 1 heure plus tard avec 0,1 ml de méthanol. La solution de polymère couplée et non réactive résultante a été précipitée dans de l'eau. Le bras non couplé avait un GPC de 190 kg / mol et les principales espèces avaient une GPC de 1116 kg / mol.

### Préparation de l'exemple de polymère P3.

Dans le réacteur 1, ont été ajoutés successivement : 0,18 1 de cyclohexane ; 9,19 g de 1,1-diphényléthylène ; 96 mg d'éther diéthylique ; 12 ml de sec-butyllithium à 0,17 mol / L ; qui ont été chauffés à 50 ° C. 31,7 g de styrène ont été ajoutés lentement en 34 minutes. Au bout de 140 minutes, 134 g de la solution résultante ont été transférés dans le réacteur 2. Le réacteur 2 contenait 1,10 1 de cyclohexane séché ; 0,47 ml de 1,2-diéthoxypropane ; 152,4g d'isoprène. 0,5 ml de sec-butyllithium et a ensuite été chauffé à 50 ° C quelques minutes avant d'ajouter le transfert du réacteur1. Au bout de 90 minutes, 0,72 ml de divinylbenzène ont été ajoutés et la température a été augmentée à 70 ° C puis 140 minutes plus tard par 0,10 ml de méthanol. La solution de polymère couplée et non réactive résultante a été précipitée dans de l'eau. Le bras non couplé avait une GPC Mp de 198 kg / mol et les principales espèces avaient une GPC Mp de 826 kg / mol.

### Préparation du polymère exemplaire P5.

Dans le réacteur 1, on a ajouté séquentiellement : 0,20l de cyclohexane ; 11,94 g de 1,1-diphényléthylène ; 108 mg d'éther diéthylique ; 13 ml de sec-butyllithium à 0,16 mol / L ; qui ont été chauffés à 50 ° C. 27,8 g de styrène ont été ajoutés lentement en 30 minutes. Au bout de 140 minutes, 168 g de la solution résultante ont été transférés dans le réacteur 2. Le réacteur 2 contenait 1,10 1 de cyclohexane séché ; 0,46 ml de 1,2-diéthoxypropane ; 150g d'isoprène. 0,5 ml de sec-butyllithium a été ajouté au réacteur 2, puis chauffé à 50 ° C quelques minutes avant l'ajout du transfert du réacteur 1. Au bout de 90 minutes, 0,80 ml de divinylbenzène ont été ajoutés et le mélange réactionnel a été chauffé à 70 ° C, 150 minutes plus tard, avec 0,10 ml de méthanol. La solution de polymère couplée et non réactive résultante a été précipitée dans de l'eau. Le bras non couplé avait un GPCde 163 kg / mol et les principales espèces avaient une GPC de 794 kg / mol.

### Préparation du polymère exemplaire P6.

Dans le réacteur 1, on a ajouté séquentiellement : 0,20l de cyclohexane ; 9,19 g de 1,1-diphényléthylène ; 95 mg d'éther diéthylique ; 10 ml de sec-butyllithium (0,15 mol / L) ; qui ont été chauffés à 50 ° C. 32,2 g de styrène ont été ajoutés lentement en 30 minutes. Après deux heures et demie, 184 g de la solution résultante ont été transférés dans le réacteur 2. Le réacteur 2 contenait 1,10 1 de cyclohexane séché ; 0,30 ml de 1,2-diéthoxypropane ; 21,3 g de styrène, 115,2 g d'isoprène ; tous chauffés à 60 ° C. 0,5 ml de sec-butyllithium a été ajouté au réacteur 2 pendant quelques minutes avant d'ajouter le transfert du réacteur 1. Après 74 minutes, 3,8 g d'isoprène ont été ajoutés, puis 0,70 ml de divinylbenzène, après quoi la température a été augmentée à 70 ° C. 150 minutes plus tard, 0,10 ml de méthanol a été ajouté. La solution de polymère couplée et non réactive résultante a été précipitée dans de l'eau. Le bras non couplé avait un point de fusion GPC de 191 kg / mol et les principales espèces avaient un point de gravité GPC de 922 kg / mol.

### Préparation de l'exemple de polymère P7.

Dans le réacteur 1, on a ajouté séquentiellement : 0,20l de cyclohexane ; 11,96 g de 1,1-diphényléthylène ; 86 mg d'éther diéthylique ; 13 ml de sec-butyllithium à 0,16 mol / L ; qui ont été chauffés à 50 ° C. 28,3 g de styrène ont été ajoutés lentement en 30 minutes et mis à réagir pendant 90 minutes avant d'ajouter 9,5 g d'isoprène. Au bout d'une heure, 160 g de la solution résultante ont été transférés dans le réacteur 2. Le réacteur 2 contenait 1,10 1 de cyclohexane séché ; 0,30 ml de 1,2-diéthoxypropane ; 21,3 g de styrène, 119,7 g d'isoprène ; tous chauffés à 60 ° C. 0,5 ml de sec-butyllithium a été ajouté au réacteur 2 pendant quelques minutes avant d'ajouter le transfert du réacteur 1. Au bout de 80 minutes, on a ajouté 2,8 g d'isoprène et ensuite du divinylbenzène (0,70 ml). La température a été augmentée à 70 ° C puis 150 minutes plus tard avec 0,10 ml de méthanol. La solution de polymère couplée et non réactive résultante a été précipitée dans de l'eau. Le bras non couplé avait une GPC de 167 kg / mol et les principales espèces avaient une GPC de 840 kg / mol.

### Préparation de l'exemple de polymère P8.

Dans le réacteur 1, on a ajouté successivement : 0,24 litre de cyclohexane ; 14,5 g de 1,1-diphényléthylène ; 133 mg d'éther diéthylique ; 19 ml de sec-butyllithium à 0,16 mol / L ; tous chauffés à 50 ° C. 33,9 g de styrène ont été ajoutés lentement en 30 minutes et mis à réagir pendant 53 minutes avant d'ajouter 45,4 g de butadiène. La température a été augmentée à 70 ° C et au bout de 43 minutes 283 g de la solution résultante ont été transférés dans le réacteur 2. Le réacteur 2 contenait 1,0 litre de cyclohexane séché ; 0,43 ml de 1,2-diéthoxypropane ; 22,5 g de styrène, 23,4 g de butadiène ; tous chauffés à 50 ° C. 0,6 ml de sec-butyllithium a été ajouté au réacteur 2 pendant quelques minutes avant d'ajouter le transfert du réacteur 1. On ajoute lentement 53,2 g de butadiène en l'espace de 40 minutes. On ajoute 6 ml de méthyltriméthoxysilane à 0,19 mmol / ml, on augmente la température à 70 ° C et deux heures et demie plus tard, on ajoute 0,10 ml de méthanol. La solution de polymère couplée et non réactive résultante a été précipitée dans de l'eau. Le bras non couplé avait une GPC de 103 kg / mol et les principales espèces avaient une GPC de 206 kg / mol.

**[Table 1]**

| Nom | Description | Structure | degré de ramifica tion | Taux de DPE dans les blocs terminaux | masse des blocs terminaux |
|---|---|---|---|---|---|
| | | | | %w | kg/mol |
| COMP4 | SIBS avec bloc terminaux modifiés DPE | [(S/DPE23) - B40/I60 -]n | ~3 | 23 | 18 |
| COMP5 | SIBS étoilé avec bloc terminaux modifiés DPE et bloc de PS dans la partie élastomère | [(S/DPE23) - B40/I60 - S -]n | ~8 | 23 | 11 |
| P1 | SIS à polyisoprène à taux de vinyl de 47.6 et blocs terminaux modifiés DPE | [(S/DPE23) - Iv47.6 - ]n | ~3 | 22 | 19 |
| P2 | S-I/S-S avec blocs terminaux modifies DPE et dans la partie élastomère du polystyrène et du polyisoprène à taux de vinyl de 29.4 | [(S/DPE22.4) - S15/Iv29.4 -]n | ~8 | 22 | 18 |
| P6 | S-I/S-S avec blocs terminaux modifies DPE et dans la partie élastomère du polystyrène et du polyisoprène à taux de vinyl de 33 et du polyisoprène à faible taux de vinyl (9) | [(S/DPE24.5) - Iv9 - Iv33/S15.6 -]n | ~5 | 22 | 21 |
| P7 | S-I/S-S avec blocs terminaux modifies DPE et dans la partie élastomère du polystyrène et du polyisoprène à taux de vinyl de 29 et du polyisoprène à faible taux de vinyl (8) | [(S/DPE30) - Iv8 - Iv29/S -]n | ~5 | 30 | 15 |
| P5 | SIS à polyisoprène à taux de vinyl de 49 et blocs terminaux modifiés DPE | [(S/DPE30) - Iv49 -]n | ~4 | 30 | 16 |
| P8 | SSBS avec blocs terminaux modifiés DPE et dans la partie élastomérique , un butadiène à faible taux de vinyl, un butadiène à fort taux de vinyl (64) et du polystyrène | [(S/DPE30) - B - Bv64/S23 -]n | ~2 | 30 | 14 |

**[Table 1bis]**

| | Chaîne linéaire avant couplage | | | | |
|---|---|---|---|---|---|
| Nom | masse mesurée par SEC avec étalon PS | quantité de cycles aromatiques mesurée par RMN | quantité de motifs isopréniques mesurée par RMN | quantité de motifs butadiéniques mesurée par RMN | quantité de motifs vinyl mesurée par RMN |
| | | %w | %w | %w | %w |
| COMP4 | 194 | 23 | 60 | 40 | 33 |
| COMP5 | 195 | 30 | 60 | 40 | 39 |
| P1 | 185 | 17 | 100 | 0 | 48 |
| P2 | 189 | 28 | 100 | 0 | 29 |
| P6 | 187 | 31 | 100 | 0 | 32 |
| P7 | 167 | 29 | 100 | 0 | 29 |
| P5 | 163 | 17 | 100 | 0 | 49 |
| P8 | 103 | 37 | 0 | 100 | 44 |

**[Table 1ter]**

| Nom | Mn : valeur du pic du maximum de masse mesurée par SEC avec détecteur UV et étalon PS |
|---|---|
| | kg/mol |
| COMP4 | 267 |
| COMP5 | 393 |
| P1 | 383 |
| P2 | 387 |
| P6 | 386 |
| P7 | 344 |
| P5 | 339 |
| P8 | 206 |

On utilise également le DIENIC, le PEBAX 2533, le SIS D1161 qui sont des comparatifs.

Le DIENIC est un mélange à matrice caoutchouc type SBR, chargé avec de la silice et vulcanisé. Il contient également des plastifiants. Ci-dessous la formule du DIENIC (en pce).

**[Table 2]**

| | |
|---|---|
| SBR | 100 |
| Silice micro perle | 60 |
| Huile de process | 2 |
| Résine tackifiante | 40 |
| Trimethylquinone | 1 |
| Cire anti-ozone | 2 |
| Paraphénylène diamine | 2.5 |
| Silane | 5 |
| CBS | 1,6 |
| DPG | 1,6 |
| MBTS | 0,7 |
| Soufre | 1 |
| Acide stéarique | 2 |
| ZNO | 1 |

Le PEBAX 2533 est un élastomère thermoplastique à blocs polyéthers et à blocs polyamides commercialisé par la société Arkéma.

Le SIS D1161 est un copolymère triblocs linéaire à base de styrène et d'isoprène, commercialisé par la société Kraton sous la référence KRATON D1161.

### Exemple 1 : Caractérisation des propriétés dynamiques : balayage en déformation

Les propriétés dynamiques G* et G" sont mesurées sur un viscoanalyseur (Metravib V A4000), selon la norme ASTM D 5992 - 96. On enregistre la réponse d'un échantillon de composition voulue (éprouvette cylindrique de 2 mm d'épaisseur et de 78 mm2 de section), soumis à une sollicitation sinusoïdale en cisaillement simple alterné, à la fréquence de 10Hz, à une température de 40°C et selon la norme ASTM D 1349 - 99. On effectue un balayage en amplitude de déformation crête à crête de 0,1 à 50% (cycle aller), puis de 50% à 1 % (cycle retour).

Le tableau 3 montre que les rigidités des différents TPE excepté celle du PEBAX et du KD 16-23 sont, par comparaison avec celle du mélange diénique de référence, suffisamment basses pour leur utilisation en pneu, y compris s'il est nécessaire d'ajouter de la charge pour améliorer certaines propriétés comme la résistance à l'abrasion.

**[Table 3]**

| Matériau | DIE NIC | P6 | P7 | P5 | P8 | P1 | P2 | SIS D116 1 | PEBA X 2533 | COM P4 | COM P5 |
|---|---|---|---|---|---|---|---|---|---|---|---|
| G* (MPa) à 10% de cisaillem ent | 2.2 | 0.7 | 0.6 | 0.7 | 1.6 | 0.6 | 0.6 | 1.1 | 4.3 | 1 | 2.5 |

Cette rigidité au bon niveau s'accompagne d'une valeur de tan δ faible, comme le montre le tableau 4, excepté pour le SIS D1161. Cette faible hystérèse permet d'envisager l'ajout d'une charge tout en conservant une résistance au roulement abaissée vis-à-vis de celle d'un pneu utilisant la bande de roulement à base du DIENIC.

**[Table 4]**

| Matériau | DIE NIC | P6 | P7 | P5 | P8 | P1 | P2 | SIS D116 1 | PEBA X 2533 | COM P4 | COM P5 |
|---|---|---|---|---|---|---|---|---|---|---|---|
| tan δ max | 0.35 | 0.109 | 0.092 | 0.1 | 0.1 | 0.1 | 0.096 | 0.34 | 0.16 | 0.10 | 0.15 |

### Exemple 2 : Caractérisation des propriétés dynamiques : balayage en température

Les propriétés dynamiques G* et G" sont mesurées sur un viscoanalyseur (Metravib V A4000), selon la norme ASTM D 5992 - 96. On enregistre la réponse d'un échantillon de composition voulue (éprouvette cylindrique de 2 mm d'épaisseur et de 78 mm2 de section), soumis à une sollicitation sinusoïdale en cisaillement simple alterné, à la fréquence de 10Hz.

On réalise un balayage de -80°C à +150°C à la vitesse de 1,5°/min à une contrainte de 0,7 MPa.

Le tableau 5 montre que les polymères KD 17-04, 17-06 et 17-07 ont le maximum de leur pic de tangente delta bien positionné vis-à-vis du matériau de référence diénique. Le PEBAX a un comportement très particulier avec un pic très peu marqué et à trop basse température. Les maximum des tan δ des KD 17-12, 16-33 et 16-38 sont positionnés à une température un peu faible mais un travail de formulation permettrait de les ramener à une valeur satisfaisante. Le SIS pourrait présenter un intérêt, mais les valeurs de tangente observées dans l'expérience de balayage en déformation le disqualifient. Les KD16-17 et 16-23B ont un pic de tangente à trop basse température.

**[Table 5]**

| Matér iau | DIE NIC | P6 | P7 | P5 | P8 | P1 | P2 | SISD1 161 | PEBAX 2533 | COM P4 | COMP 5 |
|---|---|---|---|---|---|---|---|---|---|---|---|
| T du max de tan δ (°C ) | -5 | -5 | -6 | -7 | -18 | -17 | -20 | -48 | -46 | -37 | -36 |

### Exemple 3 : Caractérisation de la stabilité du module avec la température

L'expérience consiste à solliciter en compression dynamique sur un viscoanalyseur (Metravib V A4000), une éprouvette cylindrique de diamètre 10mm et de hauteur 20mm avec une amplitude dynamique de +/- 0,1% et une compression statique de 10% à une fréquence de 1Hz. Le balayage en température est réalisé en partant de la température ambiante (environ 20°) jusqu'à 200°C à la vitesse de 1°C/min.

Les résultats sont donnés dans le tableau 6.

**[Table 6]**

| matériau | P6 | P7 | P5 | P8 | P1 | P2 | SISD1161 | PEBAX 2533 | COMP4 | COMP5 |
|---|---|---|---|---|---|---|---|---|---|---|
| T à chute de rigidité de 50% | 145 | 146 | 160 | 122 | 148 | 155 | 115 | 76 | 140 | 106 |

Il apparaît clairement que les PEBAX 2533, SIS D1161, KD 17-12, et KD 16-23 présentent une chute de rigidité précoce, au contraire des polymères expérimentaux KD 17-04, 17-06, 17-07, 16-38 et 16-33. De la même façon, la chute de rigidité de ces matériaux avec l'accroissement de température n'est que très faiblement plus importante que celle du DIENIC et permet donc leur utilisation en bande de roulement, avec de meilleures propriétés que les TPE usuels tels que le PEBAX et le SIS connus de l'homme de l'art.

En synthèse, les matériaux KD17-04, KD17-06, KD17-07, KD16-33 et KD16-38 présentent le meilleur ensemble de propriétés pour une application en poste bande de roulement.

## Revendications

1. Pneumatique comprenant une composition polymérique comprenant au moins un élastomère thermoplastique à blocs comprenant au moins un bloc élastomère et au moins un bloc thermoplastique, dans lequel chaque bloc élastomère comprend au moins 70% en poids d'unités issues de l'isoprène, par rapport au poids dudit bloc élastomère, et ledit bloc thermoplastique comprend 65 à 80% en poids d'unités issues d'un ou plusieurs monomères styréniques et 20 à 35% en poids d'unités issues du diphényléthylène, par rapport au poids dudit bloc thermoplastique.

2. Pneumatique selon la revendication 1, **caractérisé en ce que** l'élastomère thermoplastique à blocs comprend au moins un bloc élastomère comprenant des unités issues de monomères styréniques.

3. Pneumatique selon la revendication 2, **caractérisé en ce que** les unités issues de monomères styréniques dans ledit bloc élastomère représentent 10 à 20% en poids du bloc élastomère.

4. Pneumatique selon l'une quelconque des revendications précédentes, **caractérisé en ce que** l'élastomère thermoplastique comprend au moins un bloc élastomère constitué d'unités issues de l'isoprène et d'unités issues d'un ou plusieurs monomères styréniques.

5. Pneumatique selon l'une quelconque des revendications précédentes, **caractérisé en ce que** l'élastomère thermoplastique comprend au moins un bloc élastomère constitué d'unités issues de l'isoprène.

6. Pneumatique selon l'une quelconque des revendications précédentes, **caractérisé en ce que** l'élastomère thermoplastique comprend au moins un bloc élastomère constitué d'unités issues de l'isoprène et au moins un bloc élastomère constitué d'unités issus de l'isoprène et d'unités issus d'un ou plusieurs monomères styréniques.

7. Pneumatique selon l'une quelconque des revendications précédentes, **caractérisé en ce que** le ou les monomères styréniques sont choisis parmi le styrène, l'o-, m- ou p-méthylstyrène, l'alpha-méthylstyrène, le beta-méthylstyrène, le 2,6-diméthylstyrène, le 2,4-diméthylstyrène, l'alpha-méthyl-o-méthyl styrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chlorostyrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène, l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle, de préférence le monomère styrénique est le styrène.

8. Pneumatique selon l'une quelconque des revendications précédentes, **caractérisé en ce que** l'élastomère thermoplastique représente 15 à 100 pce de la composition polymérique.

9. Pneumatique selon l'une quelconque des revendications précédente, comprenant une bande de roulement, **caractérisé en ce que** ladite composition polymérique est présente dans tout ou partie de la bande de roulement.

## Patentansprüche

1. Reifen, umfassend eine Polymerzusammensetzung, umfassend mindestens ein thermoplastisches Blockelastomer, das mindestens einen elastomeren Block und mindestens einen thermoplastischen Block umfasst, wobei jeder elastomere Block mindestens 70 Gew.-% Einheiten, die sich von Isopren ableiten, bezogen auf das Gewicht des elastomeren Blocks, umfasst und der thermoplastische Block 65 bis 80 Gew.-% Einheiten, die sich von einem oder mehreren Styrolmonomeren ableiten, und 20 bis 35 Gew.-% Einheiten, die sich von Diphenylethylen ableiten, bezogen auf das Gewicht des thermoplastischen Blocks, umfasst.

2. Reifen nach Anspruch 1, **dadurch gekennzeichnet, dass** das thermoplastische Blockelastomer mindestens einen elastomeren Block umfasst, welcher Einheiten, die sich von Styrolmonomeren ableiten, umfasst.

3. Reifen nach Anspruch 2, **dadurch gekennzeichnet, dass** die Einheiten, die sich von Styrolmonomeren ableiten, in dem elastomeren Block 10 bis 20 Gew.-% des elastomeren Blocks ausmachen.

4. Reifen nach einem der vorhergehenden Ansprüche, **dadurch gekennzeichnet, dass** das thermoplastische Elastomer mindestens einen elastomeren Block umfasst, welcher aus Einheiten, die sich von Isopren ableiten, und Einheiten, die sich von einem oder mehreren Styrolmonomeren ableiten, besteht.

5. Reifen nach einem der vorhergehenden Ansprüche, **dadurch gekennzeichnet, dass** das thermoplastische Elastomer mindestens einen elastomeren Block umfasst, welcher aus Einheiten, die sich von Isopren ableiten, besteht.

6. Reifen nach einem der vorhergehenden Ansprüche, **dadurch gekennzeichnet, dass** das thermoplastische Elastomer mindestens einen elastomeren Block, welcher aus Einheiten, die sich von Isopren ableiten, besteht, und mindestens einen elastomeren Block, welcher aus Einheiten, die sich von Isopren ableiten, und Einheiten, die sich von einem oder mehreren Styrolmonomeren ableiten, besteht, umfasst.

7. Reifen nach einem der vorhergehenden Ansprüche, **dadurch gekennzeichnet, dass** das Styrolmonomer bzw. die Styrolmonomere aus Styrol, o-, m- oder p-Methylstyrol, alpha-Methylstyrol, beta-Methylstyrol, 2,6-Dimethylstyrol, 2,4-Dimethylstyrol, alpha-Methyl-o-methylstyrol, alpha-Methyl-m-methylstyrol, alpha-Methyl-p-methylstyrol, beta-Methyl-o-methylstyrol, beta-Methyl-m-methylstyrol, beta-Methyl-p-methylstyrol, 2,4,6-Trimethylstyrol, alpha-Methyl-2,6-dimethylstyrol, alpha-Methyl-2,4-dimethylstyrol, beta-Methyl-2,6-dimethylstyrol, beta-Methyl-2,4-dimethylstyrol, o-, m- oder p-Chlorstyrol, 2,6-Dichlorstyrol, 2,4-Dichlorstyrol, alpha-Chlor-o-chlorstyrol, alpha-Chlor-m-chlorstyrol, alpha-Chlor-p-chlorstyrol, beta-Chlor-o-chlorstyrol, beta-Chlor-m-chlorstyrol, beta-Chlor-p-chlorstyrol, 2,4,6-Trichlorstyrol, alpha-Chlor-2,6-dichlorstyrol, alpha-Chlor-2,4-dichlorstyrol, beta-Chlor-2,6-dichlorstyrol, beta-Chlor-2,4-dichlorstyrol, o-, m- oder p-Butylstyrol, o-, m- oder p-Methoxystyrol, o-, m- oder p-Chlormethylstyrol, o-, m-oder p-Brommethylstyrol und Styrolderivaten, die durch eine Silylgruppe substituiert sind, ausgewählt ist bzw. sind und vorzugsweise das Styrolmonomer Styrol ist.

8. Reifen nach einem der vorhergehenden Ansprüche, **dadurch gekennzeichnet, dass** das thermoplastische Elastomer 15 bis 100 phe der Polymerzusammensetzung ausmacht.

9. Reifen nach einem der vorhergehenden Ansprüche mit einer Lauffläche, **dadurch gekennzeichnet, dass** die Polymerzusammensetzung in der gesamten Lauffläche oder einem Teil davon vorliegt.

## Claims

1. Tyre comprising a polymeric composition comprising at least one block thermoplastic elastomer comprising at least one elastomer block and at least one thermoplastic block, in which each elastomer block comprises at least 70% by weight of units resulting from isoprene, with respect to the weight of said elastomer block, and said thermoplastic block comprises 65% to 80% by weight of units resulting from one or more styrenic monomers and 10% to 35% by weight of units resulting from diphenylethylene, with respect to the weight of said thermoplastic block.

2. Tyre according to Claim 1, **characterized in that** the block thermoplastic elastomer comprises at least one elastomer block comprising units resulting from styrenic monomers.

3. Tyre according to Claim 2, **characterized in that** the units resulting from styrenic monomers in said elastomer block represent 10% to 20% by weight of the elastomer block.

4. Tyre according to any one of the preceding claims, **characterized in that** the thermoplastic elastomer comprises at least one elastomer block formed of units resulting from isoprene and of units resulting from one or more styrenic monomers.

5. Tyre according to any one of the preceding claims, **characterized in that** the thermoplastic elastomer comprises at least one elastomer block formed of units resulting from isoprene.

6. Tyre according to any one of the preceding claims, **characterized in that** the thermoplastic elastomer comprises at least one elastomer block formed of units resulting from isoprene and at least one elastomer block formed of units resulting from isoprene and of units resulting from one or more styrenic monomers.

7. Tyre according to any one of the preceding claims, **characterized in that** the styrenic monomer(s) are chosen from styrene, o-, m- or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m- or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m- or p-butylstyrene, o-, m- or p-methoxystyrene, o-, m- or p-chloromethylstyrene, o-, m- or p-bromomethylstyrene, or styrene derivatives substituted by a silyl group; preferably, the styrenic monomer is styrene.

8. Tyre according to any one of the preceding claims, **characterized in that** the thermoplastic elastomer represents 15 to 100 phr of the polymeric composition.

9. Tyre according to any one of the preceding claims, comprising a tread, **characterized in that** said polymeric composition is present in all or part of the tread.
